# FASCICULE DE BREVET EUROPEEN

(11) **EP 0 629 180 B1**
(45) Date de publication et mention de la délivrance du brevet: **31.01.1996**
(21) Numéro de dépôt: 93905450.8
(22) Date de dépôt: 02.03.1993
(51) Int. Cl.: C04B 18/24, C04B 28/02, B65D 65/38

(54) **UTILISATION D'UN MATERIAU POUR LA PROTECTION D'ARTICLES CONTRE LES CHOCS PAR DEFORMATION PROGRESSIVE ET IRREVERSIBLE**
VERWENDUNG EINES IRREVERSIBEL UND STUFENWEISE VERFORMBAREN MATERIALS ZUM SCHÜTZEN VON GEGENSTÄNDEN VOR SCHLÄGEN
USE OF A MATERIAL CAPABLE OF UNDERGOING A GRADUAL AND IRREVERSIBLE DEFORMATION FOR PROTECTING ARTICLES AGAINST IMPACTS

(30) Priorité: 03.03.1992 FR 9202757
(43) Date de publication de la demande: 21.12.1994
(73) Titulaire: LAFARGE NOUVEAUX MATERIAUX, F-92120 Montrouge (FR)
(72) Inventeur: CHAPPUIS, Jacques, F-38290 Frontonas (FR)
(74) Mandataire: Tilloy, Anne-Marie
(86) Numéro de dépôt international: FR9300214
(87) Numéro de publication internationale: WO9317977

(56) Documents cités:
- WO-A-86/03505
- WO-A-91/10011
- FR-A- 1 051 196
- FR-A- 2 307 930
- FR-E- 12 352
- US-A- 2 076 349
- US-A- 4 033 913
- PATENT ABSTRACTS OF JAPAN, vol. 015, no. 104 (C-814), 13 mars 1991
- CHEMICAL ABSTRACTS, vol. 109, no. 22, novembre 1988, Columbus, OH (US); no. 196039f,

## Description

L'invention a pour objet une protection, d'articles contre les chocs capable de dissiper l'énergie occasionnée par des chocs, sans la restituer, en particulier sous la forme d'emballage.

Afin de constituer une protection efficace et donc d'empêcher que l'objet à protéger ne soit endommagé, les matériaux protecteurs doivent être capables d'absorber progressivement l'énergie résultant d'un choc, mais, sans à-coups ni rupture brutale, ceci afin que le matériel à protéger ne soit pas endommagé.

Par exemple, dans les applications militaires nécessitant des matériaux d'amortissement, principalement lors des parachutages ou des largages, le matériau classiquement utilisé est un nid d'abeille en carton formé d'un réseau de cellules hexagonales. Ce matériau peut être utilisé en plusieurs couches d'épaisseur, assemblées entre elles et disposées entre le matériel parachuté et la plate-forme sur laquelle il est placé. Ce matériau présente plusieurs inconvénients. Lorsqu'il est soumis à un fort taux d'humidité, il est inopérant car il a perdu une grande partie de ses propriétés mécaniques. Par ailleurs, lorsqu'il est comprimé sous l'effet d'un choc, il se produit un affaissement des parois cartonnées du nid d'abeille, qui conduit, selon le cas, à une diminution soit brutale soit par à-coups de la résistance en compression. L'enfoncement d'un nid d'abeille qui, par conséquent, ne se fait pas de manière progressive, conduit à des variations brutales de la décélération. De ce fait, le matériel à protéger subit des secousses risquant de le détériorer.

D'autres matériaux ont déjà été proposés pour réaliser des emballages protecteurs contre les chocs.

Parmi les plus connus, on peut citer le polystyrène. Mais il n'est pas biodégradable et, sous l'action de la chaleur ou lors de sa combustion, il peut dégager des substances toxiques. Or, après usage, la plupart des matériaux d'emballage sont rejetés dans les ordures ménagères lesquelles sont souvent soumises à des traitements d'incinération.

On connaît également des corps cellulaires ou en mousse renforcés par des fibres.

Les corps décrits dans le brevet européen 242361 sont obtenus en ajoutant à une dispersion de fibres, pouvant être des fibres cellulosiques, plusieurs agents organiques, un premier pour abaisser la tension superficielle, un second pour réaliser l'expansion, et enfin un ou plusieurs polymères augmentant la viscosité, solubles ou aptes à gonfler fortement. Du fait de la présence de substances organiques en proportion importante dès qu'un corps en mousse volumineux est recherché, on retrouve les problèmes de toxicité et de pollution évoqués ci-dessus pour le polystyrène.

En outre, ces corps, cellulaires ou en mousse, sont onéreux car ils nécessitent l'emploi de quantités non négligeables de matières premières onéreuses.

FR-A-2 307 930 décrit un matériau constitué par un liant hydraulique dans lequel est dispersé un produit fibreux constitué par des fibres papetières.

L'invention a pour principal objectif des protections efficaces contre les chocs, qui ne présentent pas les inconvénients précités de l'art antérieur.

C'est à dire, il est recherché une protection contre les chocs, capable de se déformer progressivement et de façon irréversible, qui soit en outre à la fois :
- économique,
- respectueux de l'environnement et non toxique,
- efficace pour des chocs violents,
- efficace quand il est employé à titre préventif contre les impacts, par exemple dans des emballages,
- facile à mettre en oeuvre par moulage.
D'une façon générale, l'invention concerne donc l'utilisation d'un materiau qui comprend, pour 100 parties en poids d'au moins un liant hydraulique non hydraté, de 2,5 à 75 parties en poids de fibres cellulosiques dispersées dans la matrice résultant de la prise et du durcissement du (ou des) liant(s) hydraulique(s), et en ce que le matériau présente une fois séché une densité comprise entre 0,15 et 0,60 pour la protection d'articles contre les chocs par déformation progressive et irréversible.

On a en effet découvert que les matériaux légers et fibrés conformes à l'invention, sous l'effet d'une compression, opposent une contrainte pratiquement constante ou faiblement croissante au fur et à mesure de leur enfoncement et ce, jusqu'à division par 2 ou plus de leur épaisseur. Quand on reporte sur des courbes le comportement tout à fait intéressant en compression de ces matériaux, on peut voir que ces matériaux ont une courbe effort/déformation en compression qui, après un faible domaine élastique pour des enfoncements très faibles (de l'ordre de 1 % à 2 %), présente une droite de faible pente, laquelle s'infléchit ensuite vers le haut, et qui s'accroît enfin de manière plus significative pour des enfoncements toujours supérieurs à la moitié de l'épaisseur initiale de l'échantillon. En d'autres termes, les matériaux selon l'invention peuvent absorber progressivement l'énergie cinétique d'un mobile en mouvement au fur et à mesure de leur déformation, mais sans jamais céder brutalement ou par à-coups. C'est pourquoi, sous l'effet d'un choc, grâce à la protection selon l'invention, peu d'impacts voire pas un seul impact ne se répercute sur le matériel à protéger. Ceci résulte de la déformabilité plastique (donc irréversible) et tout à fait particulière des matériaux selon l'invention. Ces matériaux sont donc très différents des corps élastiques, lesquels opposent une résistance proportionnelle à la déformation et restituent l'énergie emmagasinée lorsque l'effort cesse.

Les matériaux des protections selon l'invention sont le plus judicieusement employés lorsqu'ils travaillent dans un domaine de déformation relativement modérée.

Avantageusement, les protections selon l'invention sont faites dans un matériau isotrope. De la sorte, on bénéficie d'un comportement équivalent dans toutes les directions. En effet, du fait de son homogénéité, on a un enfoncement équilibré quand il est uniformément réparti. En d'autres termes, il ne se produit pas d'enfoncement préférentiel sur certaines Zones, plus fragiles, pouvant provoquer une inclinaison du matériel à protéger ou des impacts sur le matériel à protéger, quand le matériau résistant aux chocs est isotrope.

Conformément à un mode de réalisation préféré de l'invention, le matériau pour la fabrication de protection efficace contre les chocs comprend, pour 100 parties en poids d'au moins un liant hydraulique, 5 à 50 parties en poids de fibres cellulosiques dispersées dans la matrice résultant de la prise et du durcissement du (ou des) liant(s) hydraulique(s), et présente une fois séché une densité comprise entre 0,15 et 0,60.

Conformément à un mode de réalisation encore préféré de l'invention, le matériau pour la fabrication de protection efficace contre les chocs comprend, pour 100 parties en poids d'au moins un liant hydraulique, 10 à 25 parties en poids de fibres cellulosiques dispersées dans la matrice résultant de la prise et du durcissement du (ou des) liant(s) hydraulique(s) et présente une fois séché une densité comprise entre 0,2 et 0,4.

En faisant varier les caractéristiques physico-chimiques des matériaux des protections selon l'invention (nature du liant hydraulique, taux de fibres et densité), on obtient une gamme de produits présentant des niveaux très variables de paliers de résistance en compression, généralement entre 0,1 et 4 MPa. Les dimensions de ces produits pourront être optimisées en fonction de l'énergie qu'ils pourront être amenés à dissiper au cours de leur écrasement. Par cette sélection (nature du liant, taux de fibres, densité, surface et hauteur de la pièce protectrice), l'invention permet de fabriquer des protections ayant la résistance en compression appropriée à l'application spécifique à laquelle elles sont destinées.

Comme liant hydraulique, on peut utiliser du ciment tel que le ciment Portland, les ciments alumineux, ou du plâtre.

Conformément à l'invention, les matériaux utiles pour réaliser des protections contre les chocs sont renforcés avec des fibres cellulosiques qui leur confèrent une bonne cohésion.

Eventuellement, on incorpore dans la composition servant à la préparation des matériaux selon l'invention, des agents pour leur conférer une qualité particulière. A cet égard, on peut prévoir l'ajout d'agents d'hydrofugation, pour améliorer leur résistance à l'humidité. En effet, dans des conditions sévères, par exemple lors d'immersion sous l'eau, leur porosité peut s'imprégner d'eau, ce qui modifie leur comportement en compression. Cependant, il faut noter qu'après séchage, les matériaux des protections selon l'invention retrouvent leurs caractéristiques en compression.

Pour éviter qu'ils ne s'imprègnent d'eau, on peut améliorer simplement leur résistance à l'humidité à l'aide de traitement d'hydrofugation, par exemple par un traitement en masse avec des sels d'acides gras ou des silicones, ou par un traitement en surface avec des silicones. D'autres traitements visant à rendre le matériau étanche, par exemple par trempage dans des coulis de ciment, ou par apport d'une peinture, vernis, etc, peuvent également être effectués.

Les fibres cellulosiques convenant à l'invention peuvent être de toute origine. Pour des raisons économiques, on choisit préférentiellement les fibres de cellulose issues de la récupération de vieux papiers. En association avec les fibres cellulosiques, on peut aussi utiliser d'autres fibres, par exemple des fibres minérales telles que des fibres de verre, ou des fibres en polymères organiques.

Pour produire des matériaux allégés (de densité inférieure à 0,20 par exemple), on peut incorporer dans leur préparation des agents moussants.

A plus de 30 g de cellulose par litre d'eau, il n'est pas nécessaire d'ajouter des agents permettant d'éviter la sédimentation (ou agents épaississants) car les pulpes sont généralement suffisamment épaississantes pour éviter des phénomènes de ressuage ou de sédimentation. On peut néanmoins s'opposer encore plus fortement à ces phénomènes en stabilisant davantage le mélange avant la prise du ciment grâce à des agents épaississants tels que par exemple :
- des éthers cellulosiques tels que la carboxyméthylcellulose, le carboxyméthylamidon, la méthylhydroxyéthylcellulose ou la méthylhydroxypropylcellulose,
- des polysaccarides tels que les gommes guar ou les gommes xanthane,
- des polyacrylamides,
- des charges épaississantes telles que des argiles gonflantes ou des poudres ultra-fines comme par exemple les aérosils,
- etc.

Un avantage des protections selon l'invention réside dans leur coût. Elles sont en effet fabriquées à partir de matières premières bon marché et leur préparation, outre sa simplicité, n'implique pas un coût énergétique très élevé, puisque ce dernier correspond essentiellement au séchage du matériau.

Par ailleurs, les protections selon l'invention présentent d'autres avantages :
- les protections selon l'invention, qui sont constituées de matières premières non polluantes, respectent l'environnement. En effet, on comprend très bien de la description qui précède que les protections selon l'invention sont essentiellement à usage unique. Après utilisation, elles peuvent être mises en décharge sans restriction ou être soumises à des traitements d'incinération, sans production de gaz nocifs pour l'environnement, car leurs formules ne contiennent généralement pas de matières organiques susceptibles d'être nocives et quand elles en comprennent, c'est dans des proportions très faibles.
- Les protections selon l'invention possèdent un excellent comportement au feu : en effet, elles ne sont pas inflammables et sont classées M0.
- Enfin, elles sont de bons isolants thermiques puisqu'elles ont un coefficient de conductivité thermique compris entre 0,05 et 0,14 J/m.°K.s. La combinaison des propriétés d'amortissement de chocs, de résistance au feu et d'isolation thermique est tout à fait favorable pour les applications d'emballage des munitions pour lesquelles on souhaite généralement qu'en cas d'explosion accidentelle d'un container, les munitions contenues dans les containers voisins restent intactes.

Les matériaux servant à fabriquer les protections selon l'invention sont préférentiellement issus de pâte obtenue par mélange de pulpes épaisses de fibres cellulosiques dans de l'eau avec au moins un liant hydraulique.

Un mode de réalisation préféré du procédé de fabrication de ces matériaux consiste à préparer une pulpe, par exemple par délitage dans de l'eau de vieux papiers à l'aide d'un pulpeur. On obtient ainsi une pulpe assez épaisse pouvant contenir entre 10 g et 60 g de fibres cellulosiques par litre d'eau et de préférence entre 20 g/l et 50 g/l. Le liant est ensuite ajouté en quantité plus ou moins grande selon la densité souhaitée pour le produit final. Il peut être mélangé à la pulpe avec le même type d'agitateur que celui employé pour préparer la pulpe ou un agitateur de moindre énergie. La pâte obtenue est ensuite versée dans des moules ayant les dimensions du produit fini et la pâte est arasée.

Après prise du liant, on démoule le produit, par exemple en démontant les parois latérales du moule, et le produit obtenu est séché de préférence dans une étuve ventilée ou un séchoir dont la température dépend du liant utilisé. Le séchage est terminé lorsque l'échantillon a atteint un poids constant.

Grâce à ce procédé, on peut donc faire des blocs de différentes dimensions et surtout d'épaisseur et de surface adaptées pour assurer un amortissement progressif et efficace des chocs susceptibles d'être occasionnés. Ces blocs amortisseurs pourront comprendre plusieurs parties de densité différente par simple association de matériaux conformes à l'invention et de différentes densités.

Les amortisseurs selon l'invention peuvent être prévus pour envelopper partiellement ou en totalité le matériel qui ne doit pas subir d'impact, car sinon il risquerait d'être endommagé. C'est pourquoi les protections selon l'invention sont particulièrement bien placées pour protéger le matériel fragile (appareils électroménagers, Hifi, etc.) soit sous la forme d'emballage complet ou encore de coins d'angle ou de plaques utiles pour séparer le matériel fragile de l'emballage extérieur, mais surtout pour recevoir et absorber l'énergie des éventuels chocs.

D'autres détails et paramètres opératoires apparaîtront dans la description qui suit, relative à des exemples illustratifs et non limitatifs de l'invention.

### Exemples 1 à 10

Les protections décrites dans les exemples 1 à 10 sont préparées de la manière suivante :
1) Préparation de la suspension de fibres de cellulose :
   Cette suspension est obtenue par pulpage en agitant un mélange d'eau et de vieux papiers de journaux par exemple. On peut aussi imaginer utiliser des fibres obtenues par une voie papetière. Dans nos produits, les meilleurs résultats sont obtenus pour une concentration de 20 g/l à 50 g/l de fibres. Dans les formulations contenant un agent anti-sédimentation, on a utilisé du méthylhydroxypropylcellulose qui a été ajouté à la suspension de fibres. Ce produit se comporte comme un épaississant rétenteur d'eau.
2) Ajout de liant hydraulique à la suspension 1) :
   Le liant hydraulique peut être du plâtre, du ciment alumineux ou du ciment Portland.
   Le mélange est obtenu par agitation, en l'occurrence à l'aide d'un agitateur à pale.
   La masse de liant ajoutée est telle que la densité finale du produit soit comprise entre 0,15 et 0,6.
3) Coulage de la pâte obtenue dans un moule.
4) Prise et durcissement à température ambiante pendant :
   - quelques heures pour le plâtre,
   - une journée pour les ciments alumineux,
   - 24 heures à 20°C puis 48 heures à 70°C et 100 % d'humidité relative pour les ciments Portland.
5) Démoulage.
6) Séchage en étuve à 45° C.

Les autres conditions opératoires spécifiques de chaque exemple sont données dans le tableau suivant :

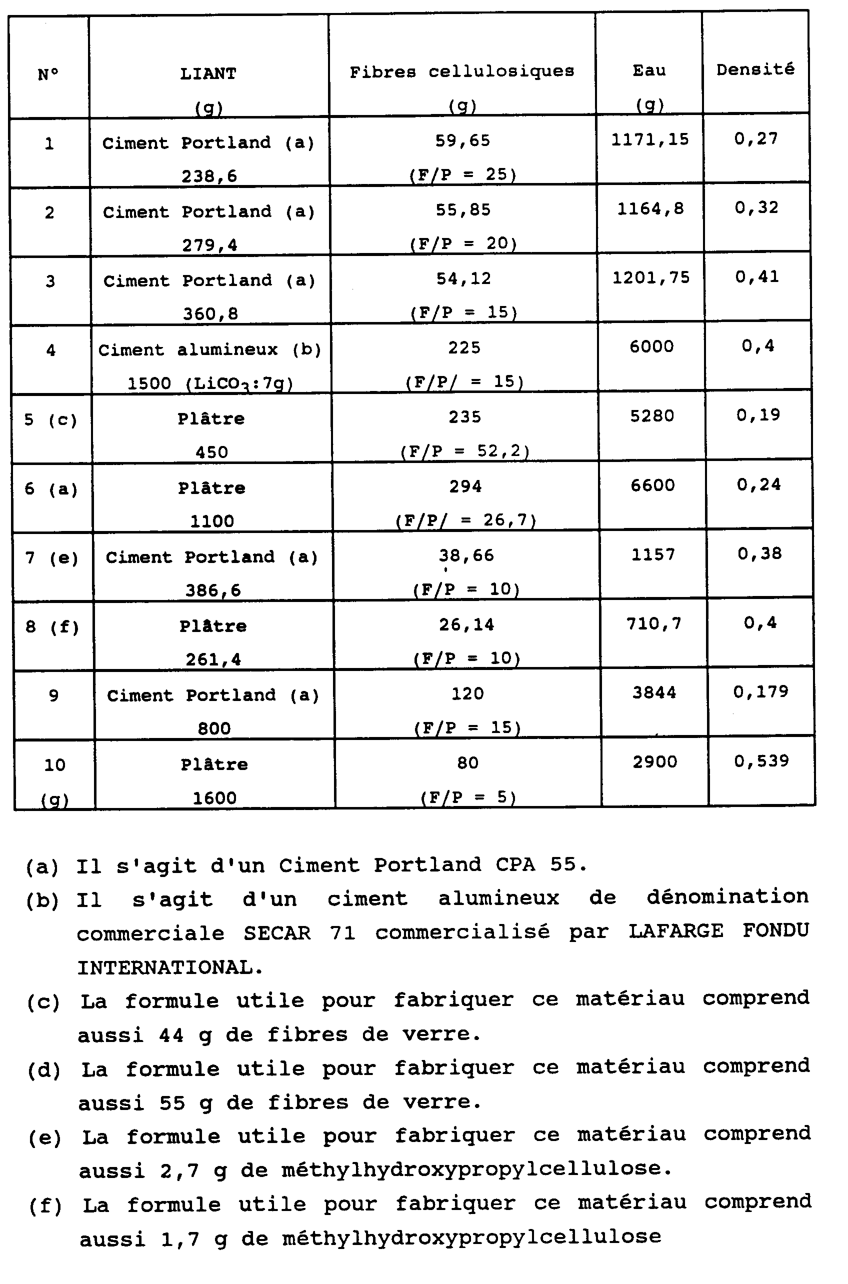

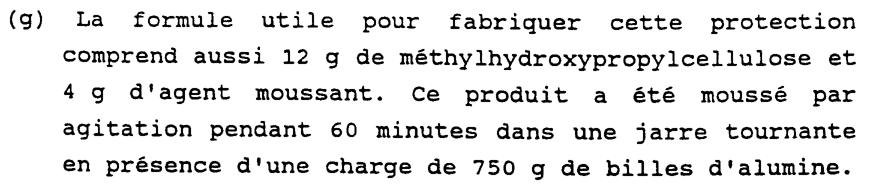

Dans le tableau suivant, on donne la résistance à la compression des matériaux exemplifiés en fonction de l'enfoncement qui est effectué à des vitesses relativement faibles. L'enfoncement, qui est exprimé en pourcentage, est égal à 100 (Ho-H)/Ho, Ho étant la hauteur initiale de l'éprouvette testée et H sa hauteur au cours de l'essai de compression. Les dimensions des éprouvettes testées sont des blocs découpés d'environ 50 mm x 50 mm x 80 mm.

Dans ce tableau, la résistance en compression est exprimée en MPa (1MPa = 10 bars).

| N° de l'exemple | Résistance en compression en fonction de l'enfoncement subi par l'échantillon | | | |
|---|---|---|---|---|
| | 12,5 % | 25 % | 37,5 % | 50 % |
| 1 | 0,33 | 0,41 | 0,66 | 1,21 |
| 2 | 0,47 | 0,72 | 1,05 | 2,04 |
| 3 | 0,82 | 1,25 | 1,96 | 3,48 |
| 4 | 0,75 | 0,86 | 1,07 | 1,81 |
| 5 | 0,14 | 0,17 | 0,21 | 0,31 |
| 6 | 0,19 | 0,21 | 0,26 | 0,37 |
| 7 | 0,56 | 0,83 | 1,28 | 2,53 |
| 8 | 0,32 | 0,41 | 0,58 | 1,06 |
| 9 | 0,10 | 0,15 | 0,20 | 0,32 |
| 10 | 1,17 | 1,42 | 1,90 | 3,02 |

## Revendications

1. Utilisation d'un matériau qui comprend, pour 100 parties en poids d'au moins un liant hydraulique non hydraté, de 2,5 à 75 parties en poids de fibres cellulosiques dispersées dans la matrice résultant de la prise et du durcissement du (ou des) liant(s) hydraulique(s) et qui présente, une fois séché, une densité comprise entre 0,15 et 0,60 pour la protection d'articles contre les chocs par déformation progressive et irréversible.

2. Utilisation selon la revendication 1, caractérisée en ce que le matériau comprend, pour 100 parties en poids d'au moins un liant hydraulique non hydraté, de 5 à 50 parties en poids de fibres cellulosiques dispersées dans la matrice résultant de la prise et du durcissement du (ou des) liant(s) hydraulique(s) et présente une fois séché une densité comprise entre 0,15 et 0,60.

3. Utilisation selon la revendication 2, caractérisée en ce que le matériau comprend, pour 100 parties en poids d'au moins un liant hydraulique, de 10 à 25 parties en poids de fibres cellulosiques dispersées dans la matrice résultant de la prise et du durcissement du (ou des) liant(s) hydraulique(s) et présente une fois séché une densité comprise entre 0,2 et 0,4.

4. Utilisation selon l'une quelconque des revendications 1 à 3, caractérisée en ce que le liant hydraulique est choisi parmi les ciments tels que le ciment Portland et les ciments alumineux ou le plâtre.

5. Utilisation selon l'une quelconque des revendications 1 à 4, caractérisée en ce que l'agent permettant d'éviter la sédimentation de la pâte est choisi parmi les éthers de cellulose tels que :
- des éthers cellulosiques tels que la carboxyméthylcellulose, le carboxyméthylamidon, la méthylhydroxyéthylcellulose ou la méthylhydroxypropylcellulose,
- des polysaccarides tels que les gommes guar ou les gommes xanthane,
- des polyacrylamides,
- des charges épaississantes telles que des argiles gonflantes ou des poudres ultra-fines comme par exemple les aérosils.

6. Utilisation selon l'une quelconque des revendications 1 à 5, caractérisée en ce que le matériau est isotrope.

7. Utilisation selon l'une des revendications 1 à 6, caractérisée en ce que la protection contre les chocs a la forme de bloc obtenu par association d'au moins deux couches de matériau de densité différente.

8. Utilisation selon l'une des revendications 1 à 7 pour la protection d'articles contre les chocs par déformation progressive et irréversible sous la forme d'emballage d'articles.

## Claims

1. Use of a material comprising for 100 parts by weight of at least one non-hydrous, hydraulic binding agent, 2.5 to 75 parts by weight cellulosic fibres dispersed in the matrix formed by the setting and hardening of the binding agent or binding agents and which once dried has a density of between 0.15 and 0.60 for protecting articles from impact by progressive and irreversible deformation.

2. Use according to Claim 1, characterised in that the material comprises for 100 parts by weight of at least one non-hydrous, hydraulic binding agent, 5 to 50 parts by weight cellulosic fibres dispersed in the matrix formed by the setting and hardening of the hydraulic binding agent or binding agents and once dried has a density of between 0.15 to 0.60.

3. Use according to Claim 2, characterised in that the material comprises for 100 parts by weight of at least one hydraulic binding agent, 10 to 25 parts by weight cellulosic fibres dispersed in the matrix formed by the setting and hardening of the hydraulic binding agent or binding agents and once dried has a density of between 0.2 and 0.4.

4. Use according to any one of Claims 1 to 3, characterised in that the hydraulic binding agent is selected from cements such as Portland cement, aluminous cements or plaster.

5. Use according to any one of the Claims 1 to 4, characterised in that the agent preventing sedimentation of the paste is selected from cellulose ethers such as:
- cellulosic ethers such as carboxymethyl cellulose, carboxymethyl starch, - methylhydroxyethyl cellulose or methylhydroxypropyl cellulose,
- polysaccharides such as guar rubber or xanthane rubber,
- polyacrylamides,
- thickening agents such as swelling clays or ultra-fine powders such as aerosols, for example.

6. Use according to any one of Claims 1 to 5, characterised in that the material is isotropic.

7. Use according to any one of Claims 1 to 6, characterised in that the protection from impact is in the form of a block obtained by association with at least two layers of material having different densities.

8. Use according to one of Claims 1 to 7 for protecting articles from impact by progressive and irreversible deformation in the form of packaging articles.

## Patentansprüche

1. Verwendung eines Materials, das auf 100 Gewichtsteile von wenigstens einem nichthydrierten hydraulischen Bindemittel 2,5 bis 75 Gewichtsteile Zellulosefasern enthält, feinst verteilt in der aus dem Abbinden und dem Aushärten der (oder des) hydraulischen Bindemittel(s) resultierenden Matrix, und das, wenn trocken, eine Dichte enthalten zwischen 0,15 und 0,60 aufweist zum Schutze von Gegenständen vor Schlägen bzw. Stößen durch progressive und irreversible Verformung.

2. Verwendung nach Anspruch 1, dadurch gekennzeichnet, daß das Material auf 100 Gewichtsteile von wenigsten einem nichthydrierten hydraulischen Bindemittel 5 bis 50 Gewichtsteile Zellulosefasern enthält, feinst verteilt in der aus dem Abbinden und dem Aushärten der (oder des) hydraulischen Bindemittel(s) resultierenden Matrix, und, wenn trocken, eine Dichte zwischen 0,15 und 0,60 aufweist.

3. Verwendung nach Anspruch 2, dadurch gekennzeichnet, daß das Material auf 100 Gewichtsteile von wenigsten einem nichthydrierten hydraulischen Bindemittel 10 bis 25 Gewichtsteile Zellulosefasern enthält, feinst verteilt in der aus dem Abbinden und dem Aushärten der (oder des) hydraulischen Bindemittel(s) resultierenden Matrix, und, wenn trocken, eine Dichte zwischen 0,2 und 0,4 aufweist.

4. Verwendung nach einem der Ansprüche 1 bis 3, dadurch gekennzeichnet, daß das hydraulische Bindemittel ausgewählt wird unter den Zementen wie z.B. dem Portlandzement und den Aluminatzementen oder dem Gips.

5. Verwendung nach einem der Ansprüche 1 bis 4, dadurch gekennzeichnet, daß der Wirkstoff zur Vermeidung der Ablagerung der Masse gewählt wird unter den Zelluloseethern wie etwa:
- Zelluloseether wie z.B. Carboxymethylcellulose, Carboxymethylstärke, Methylhydroxyethylcellulose oder Methylhydroxypropylcellulose,
- Polysaccaride wie z.B. die Guar-Gummi (gommes guar) oder die Xanthan-Gummi (gommes xanthane),
- Polyacrylamide
- Verdickungsmittel wie treibende Erden bzw. Tone oder ultrafeine Pulver wie z.B. die Aerosile.

6. Verwendung nach einem der Ansprüche 1 bis 5, dadurch gekennzeichnet, daß das Material isotrop ist.

7. Verwendung nach einem der Ansprüche 1 bis 6, dadurch gekennzeichnet, daß der Schutz gegen Schläge bzw. Stöße die Form eines Blocks aufweist, hergestellt durch Vereinigung von wenigstens zwei Materialschichten unterschiedlicher Dichte.

8. Verwendung nach einem der Ansprüche 1 bis 7 in Form von Verpackungsmaterial für Gegenstände, um Gegenständen durch progressive und irreversible Deformierung vor Schlägen bzw. Stößen zu schützen.
